(19) Europäisches Patentamt / European Patent Office / Office européen des brevets

(11) **EP 2 185 369 B1**

(12) **FASCICULE DE BREVET EUROPEEN**

(45) Date de publication et mention
de la délivrance du brevet:
**02.05.2012 Bulletin 2012/18**

(51) Int Cl.:
***B60C 3/06*** *(2006.01)* ***B60C 15/02*** *(2006.01)*
***B29D 30/06*** *(2006.01)*

(21) Numéro de dépôt: **08775246.5**

(22) Date de dépôt: **21.07.2008**

(86) Numéro de dépôt international:
**PCT/EP2008/059518**

(87) Numéro de publication internationale:
**WO 2009/013265 (29.01.2009 Gazette 2009/05)**

(54) **Procede de fabrication d'un pneumatique asymetrique**

Verfahren zur Herstellung eines asymmetrischen Reifens

Method for producing an asymmetrical tyre

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **23.07.2007 FR 0705348**

(43) Date de publication de la demande:
**19.05.2010 Bulletin 2010/20**

(73) Titulaires:
  • **Société de Technologie MICHELIN
    63000 Clermont-Ferrand (FR)**
  • **Michelin Recherche et Technique S.A.
    1763 Granges-Paccot (CH)**

(72) Inventeurs:
  • **JANIN, Nicolas
    F-63200 Riom (FR)**
  • **TRAMOND, Philippe
    F-63230 Saint Ours Les Roches (FR)**

(74) Mandataire: **Dequire, Philippe Jean-Marie Denis
    Manufacture Française des Pneumatiques,
    Michelin,
    23, place des Carmes-Déchaux,
    SGD/LG/PI - F35- Ladoux
    63040 Clermont-Ferrand Cedex 09 (FR)**

(56) Documents cités:
**EP-A- 1 671 814       WO-A-02/057096
WO-A-03/010011       DE-C1- 10 154 824
US-A- 4 203 481       US-A- 5 301 728**

## Description

### Domaine de l'invention

L'invention concerne un procédé de fabrication d'un pneumatique asymétrique ainsi qu'un pneumatique asymétrique.

### Arrière plan technologique

Les suspensions des véhicules imposent souvent aux pneumatiques qui les équipent des valeurs notables d'angles de carrossage et de pincement. Comme le plus grand nombre des pneumatiques a une structure symétrique, cela entraîne en roulage un chargement asymétrique des aires de contact entre les pneumatiques et le sol conduisant à des formes d'aires de contact non-uniformes qui peuvent avoir des conséquences négatives pour certaines performances telles l'usure ou le comportement.

Pour résoudre ce problème dans le cas d'un pneumatique autoporteur, le document EP 1 671814 propose un procédé de fabrication d'un pneumatique asymétrique. Ce procédé comprend une étape d'assemblage d'un bandage non-vulcanisé, le bandage comprenant un sommet, un premier flanc et un premier bourrelet, un second flanc et un second bourrelet, et une armature de carcasse, chaque bourrelet comportant un siège et une étape de vulcanisation du bandage non vulcanisé dans un moule ayant une configuration asymétrique pour obtenir un pneumatique vulcanisé. Ce procédé est tel que le pneumatique vulcanisé a une bande de roulement de part et d'autre du plan équatorial du pneumatique avec différents rayons de courbure et différentes épaisseurs.

Le document EP 1 414 655 B1 décrit un pneumatique asymétrique destiné à être monté sur une jante symétrique dans lequel chaque flanc comprend un anneau inextensible additionnel et dans lequel les inclinaisons de l'armature de carcasse relativement à l'axe de rotation du pneumatique sont différentes des deux côtés.

La présente invention présente d'autres procédés d'obtention d'une asymétrie recherchée dans un pneumatique vulcanisé.

### Description de l'invention

Le procédé de fabrication d'un pneumatique selon l'invention comme défini dans le revendication 1, similaire au procédé du document EP 1 671 814 est caractérisé en ce qu'il utilise un moule de vulcanisation tel que, lorsque le bandage non-vulcanisé est disposé dans le moule, dans toute section méridienne, le siège du premier bourrelet présentant un angle $\beta_1$ avec l'axe de rotation et le siège du second bourrelet présentant un angle $\beta_2$ avec l'axe de rotation, on a : $\beta_1 - \beta_2 > 3$ ; $\beta_1$ et $\beta_2$ étant exprimés en degrés ; et les angles étant définis, pour chaque bourrelet, relativement à un axe Ox (respectivement Ox') parallèle à l'axe de rotation A et orienté positivement vers l'extérieur du bandage et les angles étant positifs lorsqu'ils s'étendent radialement vers l'extérieur.

Le moulage du pneumatique s'effectue ainsi dans un moule dont la géométrie est adaptée pour que le premier siège de bourrelet du bandage présente une inclinaison supérieure à celle du second siège.

Ce moulage dans un moule asymétrique entraîne une asymétrie du pneumatique vulcanisé. Cette asymétrie est notamment visible lorsque le pneumatique est monté et gonflé sur une jante de service dont les deux sièges ont la même inclinaison relativement à l'axe de rotation du pneumatique : les armatures de carcasse n'ont pas la même inclinaison relativement à l'axe de rotation. L'inclinaison est inférieure du côté du premier bourrelet qui a été moulé avec un angle $\beta_1$ supérieur.

En conséquence, le plan moyen du sommet pour ce pneumatique est décalé du côté du premier bourrelet relativement au plan moyen des bourrelets.

Le procédé selon l'invention a l'avantage de permettre de régler aisément l'asymétrie d'inclinaison des armatures de carcasse et des flancs. Cela permet de modifier de façon très notable les paramètres de géométrie et de style du pneumatique, mais aussi de modifier la poussée de dérive et par suite le comportement du pneumatique sur un véhicule.

Des formes préférentielles de l'invention font l'objet des revendications dépendantes.

Avantageusement, les inclinaisons sont telles que $\beta_1 - \beta_2 > 10$.

Avantageusement, lorsque le bandage non-vulcanisé est disposé dans le moule, dans toute section méridienne, l'armature de carcasse présentant un premier point d'inflexion disposé au niveau du premier flanc ou du premier bourrelet et un second point d'inflexion disposé au niveau du second flanc ou du second bourrelet, les tangentes aux points d'inflexion de l'armature de carcasse font avec l'axe de rotation des angles $\alpha_1$ et $\alpha_2$ sensiblement identiques.

Selon un aspect complémentaire, le procédé selon l'invention utilise un moule de vulcanisation tel que, lorsque le bandage non-vulcanisé est disposé dans le moule, dans toute section méridienne, les tangentes (T1, T2) aux point d'inflexion de l'armature de carcasse font avec l'axe de rotation des angles $\alpha_1$ et $\alpha_2$ tels que : $\alpha_1 - \alpha_2 < 0$.

**EP 2 185 369 B1**

Une telle asymétrie d'inclinaison des armatures de carcasse dans le moule de vulcanisation peut aisément être obtenue par un rapprochement des éléments moulants du premier bourrelet vers le plan médian du sommet du moule. Ou alternativement, par un éloignement des éléments moulants du second bourrelet du plan médian du sommet du moule.

Avantageusement, on a : $\alpha_1$ - $\alpha_2$ < -10 et même - 35 < $\alpha_1$ - $\alpha_2$ < -10.

Lorsque la différence d'angulation atteint 35 degrés, il devient difficile de mouler correctement le premier bourrelet car l'angle de rotation imposé à ce premier bourrelet entre son assemblage sur un tambour de confection et sa position dans le moule de vulcanisation devient trop importante.

De façon préférentielle, le sommet et les parties des flancs adjacentes au sommet du bandage sont disposés de façon symétrique relativement au plan médian du sommet du bandage dans le moule ; et les parties des flancs adjacentes au sommet disposées de façon symétrique peuvent s'étendre jusqu'à l'équateur du bandage dans le moule.

Ce procédé s'applique quelle que soit le type d'ancrage de l'armature de carcasse dans les deux bourrelets et notamment lorsque cet ancrage ne comprend pas de retournement comme dans le brevet US 6 926 054. Dans ce cas, l'armature de carcasse présente un point d'inflexion disposé dans le flanc.

Ce procédé est aussi notablement plus facile à mettre en oeuvre et moins coûteux que les moyens décrits dans le document EP 1 414 655 B1 précédemment cité.

Avantageusement, c'est le premier bourrelet qui est destiné à être disposé vers l'extérieur d'un véhicule. Lorsque de tels pneumatiques équipent un véhicule, l'asymétrie des pneumatiques tend à écarter les sommets vers l'extérieur du véhicule, cela a l'avantage d'améliorer l'impression visuelle présentée par l'ensemble pneumatique et roue mais aussi d'augmenter la voie pneumatique du véhicule. On entend par voie pneumatique la distance séparant les deux plans médians du sommet des deux pneumatiques d'un même essieu. L'augmentation de voie que l'on peut obtenir peut aisément atteindre 10 mm voire 15mm.

Dans une application particulière, le premier bourrelet a un diamètre $\Phi_1$ et le second bourrelet a un diamètre $\Phi_2$ tels que : $\Phi_1$ > -$\Phi_2$. L'écart de diamètres entre le premier et le second bourrelets peut être de 20 mm.

Lorsqu'un tel pneumatique a été vulcanisé dans un moule usuel et est monté sur sa jante de service et gonflé sensiblement à sa pression nominale, on constate un déport axial de l'ensemble du sommet du pneumatique vers le bourrelet de plus petit diamètre. Ce déport est notablement lié au fait que la résultante dans la direction axiale des efforts dus à la pression interne de gonflage n'est pas nulle en raison des géométries différentes des deux flancs du pneumatique.

## Description brève des dessins

D'autres caractéristiques et avantages de l'invention ressortent de la description faite ci-après en référence aux dessins annexés qui montrent, à titre d'exemples non limitatifs, des formes de réalisation de l'objet de l'invention :

- la figure 1 présente une vue en coupe méridienne partielle d'un pneumatique usuel monté sur sa jante de service et gonflé sensiblement à sa pression nominale ;
- la figure 2 présente, selon une vue similaire à la figure 1, un second pneumatique selon l'invention ;
- la figure 3 présente en coupe méridienne partielle une vue du profil de moulage des deux bourrelets du pneumatique de la figure 2 ;
- la figure 4 présente en coupe méridienne partielle une vue du profil de moulage d'un second type de pneumatique usuel pour véhicule de tourisme ;
- la figure 5 présente en coupe méridienne partielle une vue du profil de moulage d'un premier bourrelet d'un pneumatique asymétrique similaire à celui de la figure 4 selon un premier mode de réalisation ; et
- la figure 6 présente en coupe méridienne partielle une vue de profil de moulage d'un premier bourrelet d'un pneumatique asymétrique similaire à celui de la figure 4 selon un second mode de réalisation.

## Description détaillée des dessins

On entend par plan méridien ou axial tout plan passant par l'axe A de rotation de la roue et de la jante ; par axialement vers l'intérieur une direction dirigée vers l'intérieur de la jante et par axialement vers l'extérieur une direction vers l'extérieur de la jante.

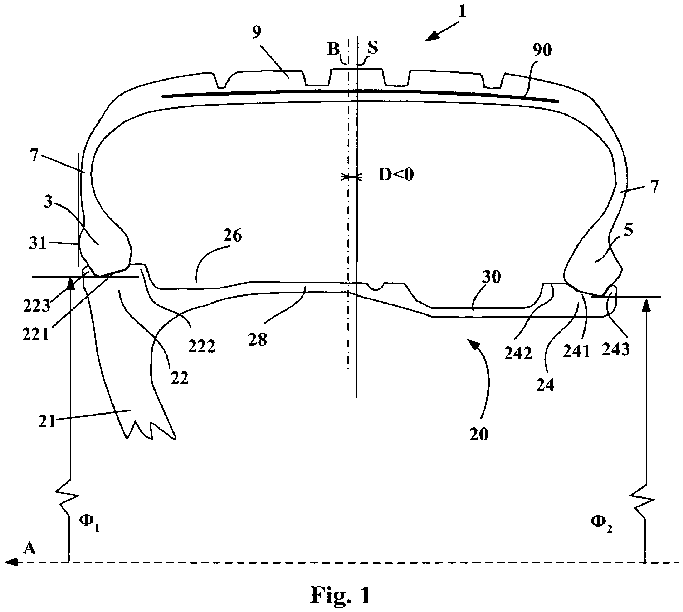

A la figure 1 est présenté, vu en section méridienne ou axiale partielle, un pneumatique 1 monté sur sa jante de service 20, gonflé sensiblement à sa pression nominale de service et non écrasé. La jante 20 forme avec un disque 21 une roue monobloc. Le disque peut aussi être fabriqué indépendamment de la jante et réuni à celle-ci par la suite. La jante 20 comprend un premier siège 22 et un second siège 24 destinés à servir de portée d'appui aux premier 3 et second 5 bourrelets du pneumatique 1.

Le premier siège 22 comprend un fond tronconique 221 confondu localement avec un cône de révolution coaxial à la jante et ouvert dans la direction du second siège 24, un bossage de sécurité 222 prolongeant le fond 221 du premier siège 22 vers le second siège 24, et un bord externe 223 prolongeant le fond 221 du premier siège du côté opposé au second siège 24.

Le second siège 24 comprend un fond tronconique 241 confondu localement avec un cône de révolution coaxial à la jante et ouvert vers le premier siège 22, un bossage de sécurité 242 prolongeant le fond 241 du second siège 24 vers le premier siège 22 et un bord externe 243 prolongeant le fond 241 du second siège du côté opposé au premier siège 22.

Le diamètre maximum du second siège est inférieur à celui du premier siège. Dans l'exemple représenté, l'ordre de grandeur de l'écart entre les diamètres maximum est de l'ordre de 20 mm. L'écart entre les rayons minimum des deux sièges est donc de l'ordre de 10 mm.

Du premier siège 22 vers le second siège 24, on trouve successivement une gorge circonférentielle 26, une portée d'appui 28 et une seconde gorge circonférentielle 30. La première gorge circonférentielle 26 sert de gorge de montage pour le premier siège 22. Le diamètre extérieur de la portée d'appui 28 correspond sensiblement au diamètre maximum du second siège 24 pour permettre d'enfiler un appui (non représenté) sur cette portée d'appui 28 en franchissant le second siège 24.

La jante 20 représentée est une jante préférentielle, mais toute autre jante avec des diamètres de sièges égaux ou inégaux s'applique aux pneumatiques selon l'invention, et ce quelle que soit la géométrie des sièges de jante.

Le pneumatique 1 comprend deux bourrelets 3 et 5 en appui sur les sièges 22 et 24 de la jante 20, deux flancs 7 et un sommet 9. Chaque bourrelet comporte des renforts annulaires orientés sensiblement circonférentiellement et pratiquement inextensibles. Ces renforts, tels des tringles, sont destinés à assurer en service le maintien des bourrelets sur les sièges de jante. Le premier bourrelet 3 a un diamètre (minimum) $\Phi_1$ supérieur au diamètre $\Phi_2$ du second bourrelet 5. Le bourrelet 3 est en appui sur le siège 22 de la jante 20 disposé du côté d'assemblage au disque 21. C'est, dans l'exemple représenté le côté destiné à être placé vers l'extérieur d'un véhicule.

A la figure 1, on peut définir les plans médians S, plan médian du sommet et B, plan médian des bourrelets montés sur leur jante de service (ou plan médian des sièges de la jante 20). Le plan médian S est défini comme le plan perpendiculaire à l'axe A et équidistant des extrémités des nappes de renfort 90 du sommet 9. On voit que le plan médian S du sommet 9 est décalé axialement vers le second bourrelet 5 d'une distance D relativement au plan médian B des bourrelets, la distance D est ici négative en prenant comme côté positif de l'axe A, le côté dirigé vers l'extérieur de la jante 20.

Ce déport axial vers le côté de la jante destiné à être disposé vers l'intérieur du véhicule (ou côté intérieur de la jante) est dû au fait que les deux flancs 7 sont de longueurs et de géométries différentes en raison de la différence de diamètres entre les deux bourrelets 3 et 5. La résultante des efforts liés à la pression de gonflage dans la direction axiale n'est pas sensiblement nulle comme usuellement pour des pneumatiques dont les deux bourrelets présentent le même diamètre, mais est dirigée vers le côté du flanc le plus haut, ici le côté intérieur de la jante.

On voit sur la figure 1 qu'en conséquence, la partie axialement la plus à l'extérieur de l'ensemble pneumatique 1 et jante 20 est constituée par l'extrémité du bourrelet 3 repérée 31. Il en résulte que, lors d'un choc trottoir ou un râpage trottoir par exemples, cette partie du bourrelet est très exposée aux dommages.

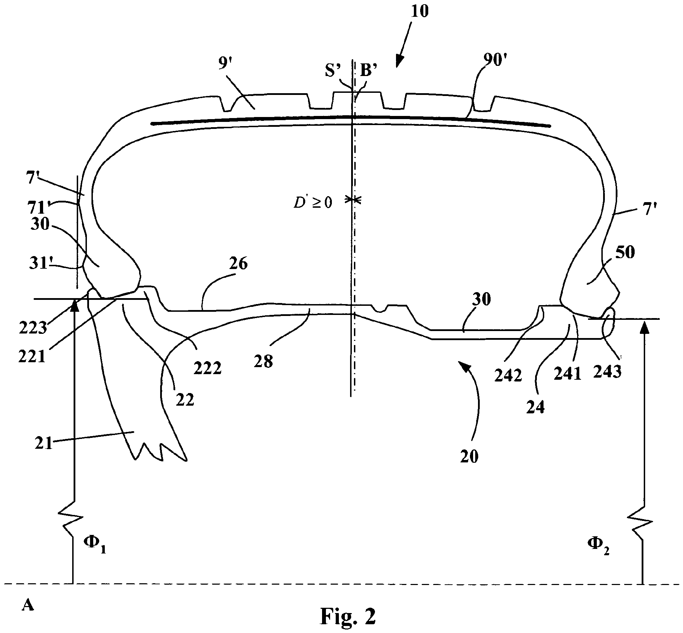

La figure 2 présente un pneumatique 10 conforme à l'invention monté sur sa jante de service 20, gonflé à sensiblement sa pression nominale et non écrasé. Ce pneumatique comprend deux bourrelets 30 et 50 en appui sur les sièges 22 et 24 de la jante 20, deux flancs 7' et un sommet 9'. Le plan médian des bourrelets est repéré B' et le plan médian du sommet S'. On voit que pour ce pneumatique le plan S' est décalé axialement vers le premier bourrelet 30 d'une distance D' positive.

En conséquence, le point disposé axialement le plus à l'extérieur de l'ensemble pneumatique 10 et jante 20 n'est plus l'extrémité du bourrelet 31' mais une partie du flanc repérée 71. Cela renforce la résistance du pneumatique 10 aux chocs et accidents qu'il est susceptible de rencontrer en service en réduisant l'exposition du bourrelet 3'. Cela a aussi l'avantage de modifier de façon positive l'apparence visuelle du pneumatique monté sur sa jante de service 20.

Dans ce qui suit, les angles sont définis pour chaque bourrelet en prenant comme référence un axe Ox (respectivement Ox') parallèle à l'axe de rotation A, avec comme direction la direction axialement vers l'extérieur. Les angles sont comptés positifs lorsqu'ils s'étendent radialement vers l'extérieur du pneumatique.

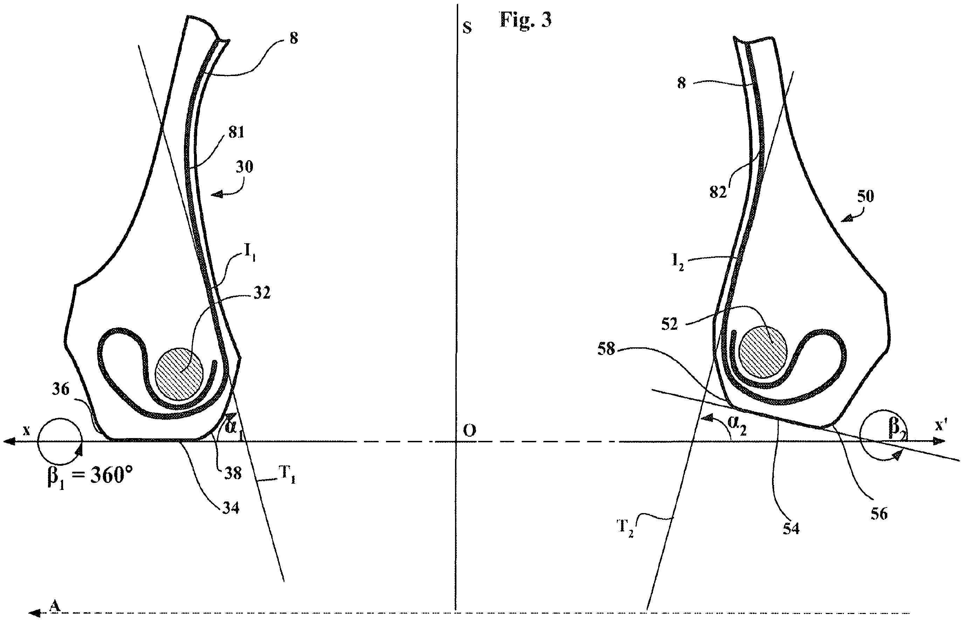

A la figure 3 est illustré un premier mode de réalisation du pneumatique selon l'invention. La figure 3 présente le profil du bourrelet extérieur 30 et du bourrelet intérieur 50 du pneumatique 10 lors de leur moulage dans leur moule de cuisson (non représenté).

Le bourrelet 30 comprend une portion 81 de l'armature de carcasse 8, un siège 34 disposé entre une pointe 36 axialement à l'extérieur et un talon 38 axialement à l'intérieur ainsi qu'un renfort inextensible annulaire 32. La portion 81 de l'armature de carcasse s'enroule autour du renfort annulaire 32 en allant du talon 38 vers la pointe 36 puis en faisant une boucle axialement vers l'intérieur pour réaliser son ancrage. Le siège de bourrelet 34 a en position de moulage une génératrice inclinée vers l'extérieur d'un angle $\beta_1 = 360° = 0°$. Les angles sont définis à $2\pi$ près.

Le bourrelet 50 comprend une portion 82 de l'armature de carcasse 8, un siège 54 disposé entre une pointe 56 axialement à l'extérieur et un talon 58 axialement à l'intérieur ainsi qu'un renfort inextensible annulaire 52. La portion 82 de l'armature de carcasse s'enroule autour du renfort annulaire 52 en allant du talon 58 vers la pointe 56 puis en faisant une boucle axialement vers l'intérieur pour réaliser son ancrage. Le siège de bourrelet 54 a une génératrice inclinée vers l'extérieur d'un angle $\beta_2$.

Compte tenu du repère choisi, l'angle $\beta_2$ est égal à 355 degrés ou encore à -5 degrés.

La géométrie du bourrelet 30 dans son moule de vulcanisation se distingue principalement de celle du bourrelet 50 en ce que le siège 34 du bourrelet 30 a une génératrice substantiellement parallèle à l'axe de rotation Ox du pneumatique. L'angle $\beta_1$ est ici égal à 360 degrés ou encore à zéro degrés.

L'ensemble du bourrelet 30 est disposé sensiblement au même endroit en moule que dans le cas du pneumatique 1, mais le bourrelet présente une rotation d'un angle sensiblement égal à - $\beta_2$, soit ici 5°. Lorsque le pneumatique 10 réalisé selon ce procédé de réalisation est monté sur sa jante de service, l'inclinaison prise par la portion d'armature de carcasse diminue en raison de cette rotation d'angle $\beta_2$ = -5 degrés du siège du bourrelet pour s'adapter à l'inclinaison du siège de jante 22.

Il en résulte qu'à l'état monté et gonflé les deux portions d'armature de carcasse 81 et 82 présentent une dissymétrie d'inclinaison qui est sensible et qui correspond au profil du pneumatique présenté à la figure 2.

Les portions d'armature de carcasse 81 et 82 présentent dans la zone des bourrelets proche des flancs un changement de courbure et un point d'inflexion respectivement $I_1$ et $I_2$. La tangente $T_1$ à la portion 81 au point d'inflexion $I_1$ croise l'axe Ox, parallèle à l'axe de rotation A de la jante avec un angle d'inclinaison $\alpha_1$. De même $T_2$ fait avec l'axe Ox', parallèle à A, un angle $\alpha_2$.

$\alpha_1$ et $\alpha_2$ ont tous les deux une valeur positive inférieure à 90 degrés. Dans l'exemple de la figure 3, $\alpha_1$ et $\alpha_2$ sont sensiblement égaux. Ces angles correspondent aux valeurs d'inclinaison des portions de nappe carcasse à leur point d'inflexion dans le bourrelet relativement à l'axe de rotation A du pneumatique 1 en moule.

Il est à noter que lors de leur vulcanisation en moule, les deux bourrelets ont une géométrie identique dans toute leur partie radialement inférieure, soit les parties des bourrelets disposées radialement au niveau du renfort annulaire et en dessous.

Dans le cas du moule préférentiel pour le pneumatique 10, on conserve substantiellement la même géométrie de moulage pour le sommet et les parties des flancs adjacentes au sommet.

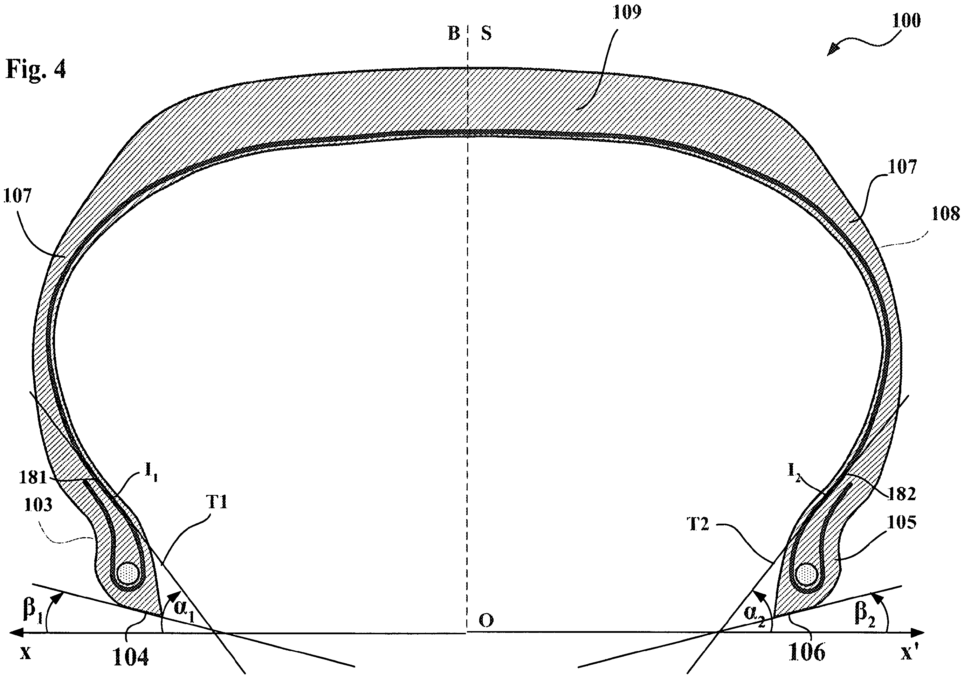

A la figure 4 est illustré, vue en section méridienne ou axiale partielle, le profil de moulage d'un second type de pneumatique usuel pour véhicules de tourisme. Le moule de vulcanisation n'est pas représenté. Ce pneumatique 100 comprend deux bourrelets 103 et 105, deux flancs 107 et un sommet 109. Les deux bourrelets ont un siège 104, respectivement 106, destiné à venir en appui sur un siège de jante non représentée. Les sièges 104 et 106 présentent une inclinaison $\beta_1$ et $\beta_2$ symétrique et égale à 5°. Chaque bourrelet comprend une portion 181 et 182 de l'armature de carcasse 108. Comme précédemment, chaque portion présente dans le bourrelet 103 ou 105 ou le flanc adjacent 107 un point d'inflexion $I_1$ et $I_2$. Les tangentes aux portions d'armature de carcasse T1 et T2 présentent une inclinaison symétrique relativement aux axes Ox et Ox' d'angles $\alpha_1$ et $\alpha_2$. Les plans médians du sommet S et des bourrelets B sont confondus. Ce pneumatique n'est pas un pneumatique asymétrique au sens de la présente demande.

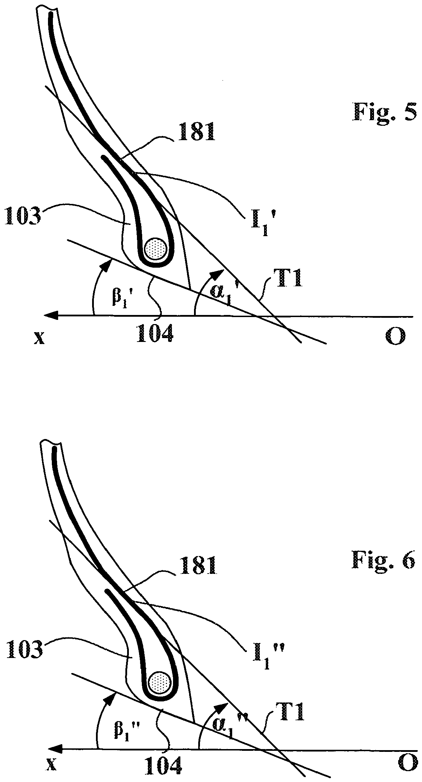

La figure 5 présente en vue méridienne partielle le profil de moulage du bourrelet 103 pour obtenir un pneumatique asymétrique.

Le profil de moulage du bourrelet 103 illustré à la figure 5 est caractérisé en ce que l'inclinaison du siège 104 $\beta_1$' est supérieure à $\beta_1$. Comme dans l'exemple précédent, l'amplitude de l'écart entre $\beta_1$' et $\beta_1$ ou $\beta_2$ est supérieure à 3° et peut être supérieure à 10° en fonction de l'asymétrie recherchée. Dans ce premier exemple, on a $\alpha_1$' = $\alpha_1$. Le moulage est donc effectué seulement avec une rotation de l'élément moulant du siège 104.

La figure 6 présente en vue méridienne partielle le profil de moulage du bourrelet 103 pour obtenir un pneumatique asymétrique selon un second mode de réalisation.

Le profil de moulage du bourrelet 103 illustré à la figure 6 est caractérisé en ce qu'on a

$$\beta_1'' = \beta_1' \succ \beta_1 \text{, et } \alpha_1'' \prec \alpha_1' = \alpha_1.$$

Le moulage du bourrelet 103 est donc effectué avec une combinaison d'une rotation du siège 104 pour augmenter l'inclinaison de ce siège lors du moulage, ainsi que d'une translation des éléments moulants du bourrelet vers le plan médian du sommet S. C'est cette translation qui augmente l'inclinaison de la tangente T1 de l'armature de carcasse au point d'inflexion $I_1$ et renforce ainsi l'asymétrie du pneumatique 100 vulcanisé.

L'amplitude de cette asymétrie est donc fonction des amplitudes de rotation et de translation du ou des éléments moulants du siège du bourrelet lors du moulage du bandage non-vulcanisé.

Des essais ont été réalisés avec les pneumatiques suivants similaires au premier type de pneumatique décrit :

- A : 235-660R480, témoin ;
- B : 235-660R480, translation du premier bourrelet vers le second au moulage ;
- C : 215-630R440, translation du premier bourrelet vers le second au moulage ;

- D : 295-740R560, translation du premier bourrelet vers le second au moulage ; et
- E : 295-740R560, rotation du siège du bourrelet lors du moulage.

Le tableau suivant présente les résultats obtenus :

| Essai | $\alpha_1 - \alpha_2$ en moule (degrés) | $\beta_1 - \beta_2$ en moule (degrés) | $\alpha_1 - \alpha_2$ monté- gonflé (degrés) | D Déport axial monté- gonflé (mm) |
|---|---|---|---|---|
| A (témoin) | -4 | 0 | +4 | -5 |
| B | -31 | 0 | -17 | 1 |
| C | -18 | 0 | -10 | -0,6 |
| D | -21 | 0 | -13 | -0,1 |
| E | 0 | +15 | 0 | -0,1 |

Le témoin A a été vulcanisé dans un moule avec une légère différence d'inclinaison des deux portions d'armature de carcasse de -4 degrés et les deux bourrelets dans la même position que monté sur leur jante de service. Le pneumatique résultant, monté et gonflé à sa pression de service présente une inclinaison des deux portions d'armature de carcasse de +4 degrés, soit une variation de 8 degrés, ainsi qu'un déport axial de -5 mm. Cela veut dire que le déport s'est effectué vers l'intérieur du véhicule, ou vers le bourrelet de plus petit diamètre. C'est l'exemple du pneumatique 1 de la figure 1.

Le pneumatique B a été vulcanisé dans un moule avec une différence d'inclinaison $\alpha_1 - \alpha_2$ substantielle de -31 degrés et les deux bourrelets dans la même position que monté sur leur jante de service. Il en résulte à l'état monté et gonflé une différence d'inclinaison des deux portions d'armature de carcasse de -17 degrés et un déport axial positif de 1 mm. Le déport axial du pneumatique témoin est ainsi complètement ramené au-delà de zéro puisqu'il est positif de 1 mm. Cet exemple correspond au pneumatique 10 illustré à la figure 2.

Le pneumatique C a été vulcanisé comme le pneumatique B selon le premier procédé de réalisation avec une différence d'inclinaison $\alpha_1 - \alpha_2$ plus faible (-18 degrés) et les deux bourrelets dans la même position que monté sur leur jante de service. Il en résulte à l'état monté et gonflé une différence d'inclinaison des deux portions d'armature de carcasse de -10 degrés et un déport axial négatif de -0,6 mm.

Le pneumatique D a été vulcanisé comme les pneumatiques B et C avec une différence d'inclinaison $\alpha_1 - \alpha_2$ intermédiaire faible (-21 degrés) et les deux bourrelets dans la même position que montés sur leur jante de service. Il en résulte à l'état monté et gonflé une différence d'inclinaison des deux portions d'armature de carcasse de -13 degrés et un déport axial négatif de -0,1 mm, soit sensiblement égal à zéro.

Le pneumatique E a été vulcanisé avec une rotation du bourrelet extérieur de +15 degrés. Les deux portions d'armature de carcasse avaient la même inclinaison relativement à l'axe de rotation. Il en résulte à l'état monté et gonflé que l'on retrouve une différence d'inclinaison des deux portions d'armature de carcasse de 9 degrés et un déport axial pratiquement nul comme dans le cas du pneumatique D.

Ces deux derniers essais indiquent que la rotation du siège du bourrelet et la translation de l'un des bourrelets vers l'autre lors du moulage permettent d'obtenir des pneumatiques dissymétriques quant à leurs inclinaisons d'armatures de carcasse dans les deux bourrelets et avec un déport axial nul ou même positif en dépit de différences de diamètres des deux bourrelets de l'ordre de 20 mm.

L'invention n'est pas limitée aux exemples décrits et représentés et diverses modifications peuvent y être apportées sans sortir de son cadre défini par les revendications annexées.

**Revendications**

1. Procédé de fabrication d'un pneumatique comportant les étapes suivantes :

   - assembler un bandage non-vulcanisé, le bandage comprenant un sommet, un premier flanc et un premier bourrelet, un second flanc et un second bourrelet, et une armature de carcasse, chaque bourrelet comportant un siège ;
   - vulcaniser le bandage non vulcanisé dans un moule ayant une configuration asymétrique pour obtenir un pneumatique vulcanisé ;

   **caractérisé en ce que** le moule est tel que, lorsque ledit bandage est disposé dans le moule, dans toute section méridienne, le siège du premier bourrelet présentant un angle $\beta_1$ avec l'axe de rotation et le siège du second bourrelet présentant un angle $\beta_2$ avec l'axe de rotation, on a :

$$\beta_1 - \beta_2 \succ 3$$

$\beta_1$ et $\beta_2$ étant exprimés en degrés ; et les angles étant définis, pour chaque bourrelet, relativement à un axe Ox (respectivement Ox') parallèle à l'axe de rotation A orienté positivement vers l'extérieur du bandage et les angles étant positifs lorsqu'ils s'étendent radialement vers l'extérieur.

2. Procédé selon la revendication 1, dans lequel $\beta_1$ - $\beta_2 >$ 10.

3. Procédé selon l'une des revendications 1 et 2, dans lequel, lorsque ledit bandage est disposé dans le moule, dans toute section méridienne, l'armature de carcasse présentant un premier point d'inflexion disposé au niveau du premier flanc ou du premier bourrelet et un second point d'inflexion disposé au niveau du second flanc ou du second bourrelet, les tangentes (T1, T2) aux point d'inflexion de l'armature de carcasse font avec l'axe de rotation des angles $\alpha_1$ et $\alpha_2$ sensiblement identiques.

4. Procédé selon l'une des revendications 1 et 2, dans lequel, lorsque ledit bandage est disposé dans le moule, dans toute section méridienne, l'armature de carcasse présentant un premier point d'inflexion disposé au niveau du premier flanc ou du premier bourrelet et un second point d'inflexion disposé au niveau du second flanc ou du second bourrelet, les tangentes (T1, T2) aux point d'inflexion de l'armature de carcasse font avec l'axe de rotation des angles $\alpha_1$ et $\alpha_2$ tels que : $\alpha_1$ - $\alpha_2 <$ 0.

5. Procédé selon la revendication 4, dans lequel on a : $\alpha_1$ - $\alpha_2 <$ -10.

6. Procédé selon la revendication 4, dans lequel : - 35 $<$ $\alpha_1$ - $\alpha_2 <$ -10.

7. Procédé selon l'une quelconque des revendications précédentes, dans lequel le sommet et les parties des flancs adjacentes au sommet du bandage sont disposés de façon symétrique relativement au plan médian du sommet du bandage dans le moule.

8. Procédé selon l'une quelconque des revendications précédentes, dans lequel le premier bourrelet est destiné à être disposé vers l'extérieur d'un véhicule.

9. Procédé selon l'une quelconque des revendications précédentes, dans lequel les premier et second flancs comportent des inserts de renforcement pour supporter la charge en cas de perte de pression de gonflage.

10. Procédé selon l'une quelconque des revendications précédentes, dans lequel le premier bourrelet a un diamètre $\Phi_1$ et le second bourrelet a un diamètre $\Phi_2$ tels que : $\Phi_1 >$ $\Phi_2$.

11. Procédé selon la revendication 10, dans lequel l'écart de diamètres entre le premier et le second bourrelets est de 20 mm.

**Claims**

1. Method for manufacturing a tyre comprising the following steps:

   - assembling an unvulcanized tyre, the tyre comprising a crown, a first sidewall and a first bead, a second sidewall and a second bead, and a carcass reinforcement, each bead comprising a seat;
   - vulcanizing the unvulcanized tyre in a mould having an asymmetric configuration in order to obtain a vulcanized tyre;

   **characterized in that** the mould is such that, when the said tyre is placed in the mould, in any meridian section, the seat of the first bead having an angle $\beta_1$ with the rotation axis and the seat of the second bead having an angle $\beta_2$ with the rotation axis, this gives:

$$\beta_1 - \beta_2 \succ 3$$

$\beta_1$ and $\beta_2$ being expressed in degrees; and the angles being defined, for each bead, relative to an axis Ox (respectively Ox') parallel to the rotation axis A oriented positively towards the outside of the tyre and the angles being positive when they extend radially outwards.

2. Method according to Claim 1, in which $\beta_1 - \beta_2 \prec 10$.

3. Method according to one of Claims 1 and 2, in which, when the said tyre is placed in the mould, in any meridian section, the carcass reinforcement having a first point of inflection placed at the first sidewall or at the first bead and a second point of inflection placed at the second sidewall or at the second bead, the tangents (T1, T2) at the point of inflection of the carcass reinforcement make substantially identical angles $\alpha_1$ and $\alpha_2$ with the rotation axis.

4. Method according to one of Claims 1 and 2, in which, when the said tyre is placed in the mould, in any meridian section, the carcass reinforcement having a first point of inflection placed at the first sidewall or at the first bead and a second point of inflection placed at the second sidewall or at the second bead, the tangents (T1, T2) at the point of inflection of the carcass reinforcement make angles $\alpha_1$ and $\alpha_2$ with the rotation axis such that: $\alpha_1 - \alpha_2 \prec 0$.

5. Method according to Claim 4, in which this gives: $\alpha_1 - \alpha_2 \prec -10$

6. Method according to Claim 4, in which: $-35 \prec \alpha_1 - \alpha_2 \prec -10$.

7. Method according to any one of the preceding claims, in which the crown and the portions of the sidewalls adjacent to the crown of the tyre are placed symmetrically relative to the mid-plane of the crown of the tyre in the mould.

8. Method according to any one of the preceding claims, in which the first bead is designed to be placed towards the outside of a vehicle.

9. Method according to any one of the preceding claims, in which the first and second sidewalls comprise reinforcing inserts in order to support the load in the event of loss of inflation pressure.

10. Method according to any one of the preceding claims, in which the first bead has a diameter $\Phi_1$ and the second bead has a diameter $\Phi_2$ such that: $\Phi_1 \succ \Phi_2$.

11. Method according to Claim 10, in which the difference in diameters between the first and the second beads is 20 mm.


**Patentansprüche**

1. Verfahren für die Herstellung eines Luftreifens, das die folgenden Schritte umfasst:

- Zusammensetzen eines nicht vulkanisierten Mantels, wobei der Mantel eine Oberseite, eine erste Seitenfläche und einen ersten Wulst, eine zweite Seitenfläche und einen zweiten Wulst sowie eine Karkassenbewehrung aufweist, wobei jeder Wulst einen Sitz aufweist;
- Vulkanisieren des nicht vulkanisierten Mantels in einer Form, die eine asymmetrische Konfiguration besitzt, um einen vulkanisierten Luftreifen zu erhalten;

**dadurch gekennzeichnet, dass** die Form derart ist, dass dann, wenn der Mantel in der Form angeordnet ist, in jedem Achsenschnitt, wenn der Sitz des ersten Wulstes einen Winkel $\beta_1$ mit der Drehachse besitzt und der Sitz des zweiten Wulstes einen Winkel $\beta_2$ mit der Drehachse besitzt, gilt:

$$\beta_1 - \beta_2 > 3$$

wobei $\beta_1$ und $\beta_2$ in Grad ausgedrückt sind; und die Winkel für jeden Wulst relativ zu einer Achse Ox (bzw. Ox') parallel zu der Drehachse A, die zur Außenseite des Mantels positiv orientiert ist, definiert sind, wobei die Winkel positiv sind, wenn sie sich radial nach außen erweitern.

2. Verfahren nach Anspruch 1, wobei $\beta_1 - \beta_2 > 10$.

3. Verfahren nach einem der Ansprüche 1 und 2 wobei dann, wenn der Mantel in der Form angeordnet ist, in jedem Achsenschnitt, wenn die Karkassenbewehrung einen ersten Biegungspunkt aufweist, der auf Höhe der ersten Seitenfläche oder des ersten Wulstes angeordnet ist, und einen zweiten Biegungspunkt aufweist, der auf Höhe der zweiten Seitenfläche oder des zweiten Wulstes angeordnet ist, die Tangenten (T1, T2) an den Biegungspunkt der Karkassenbewehrung mit der Drehachse Winkel $\alpha_1$ bzw. $\alpha_2$ bilden, die im Wesentlichen gleich sind.

4. Verfahren nach einem der Ansprüche 1 und 2, wobei dann, wenn der Mantel in der Form angeordnet ist, in jedem Achsenschnitt, wenn die Karkassenbewehrung einen ersten Biegungspunkt aufweist, der auf Höhe der ersten Seitenfläche oder des ersten Wulstes angeordnet ist, und einen zweiten Biegungspunkt aufweist, der auf Höhe der zweiten Seitenfläche oder des zweiten Wulstes angeordnet ist, die Tangenten (T1, T2) an den Biegungspunkt der Karkassenbewehrung mit der Drehachse Winkel $\alpha_1$ bzw. $\alpha_2$ bilden, derart, dass: $\alpha_1 - \alpha_2 < 0$ ist.

5. Verfahren nach Anspruch 4, wobei gilt: $\alpha_1 - \alpha_2 < -10$.

6. Verfahren nach Anspruch 4, wobei: $-35 < \alpha_1 - \alpha_2 < -10$.

7. Verfahren nach einem der vorhergehenden Ansprüche, wobei die Oberseite und die an die Oberseite des Mantels angrenzenden Teile der Seitenflächen relativ zu der Medianebene der Oberseite des Mantels in der Form symmetrisch angeordnet sind.

8. Verfahren nach einem der vorhergehenden Ansprüche, wobei der erste Wulst dazu bestimmt ist, an der Außenseite des Fahrzeugs angeordnet zu werden.

9. Verfahren nach einem der vorhergehenden Ansprüche, wobei die erste und die zweite Seitenfläche Verstärkungseinsätze aufweisen, um die Last im Fall eines Reifendruckverlusts zu tragen.

10. Verfahren nach einem der vorhergehenden Ansprüche, wobei der erste Wulst einen Durchmesser $\Phi_1$ besitzt und der zweite Wulst einen Durchmesser $\Phi_2$ besitzt, derart, dass gilt: $\Phi_1 > \Phi_2$.

11. Verfahren nach Anspruch 10, wobei der Unterschied der Durchmesser zwischen dem ersten und dem zweiten Wulst 20 mm beträgt.

**Fig. 1**

**Fig. 2**

Fig. 3

EP 2 185 369 B1

Fig. 4

EP 2 185 369 B1

Fig. 5

Fig. 6

## RÉFÉRENCES CITÉES DANS LA DESCRIPTION

**Documents brevets cités dans la description**

- EP 1671814 A
- EP 1414655 B1
- US 6926054 B